# EUROPEAN PATENT APPLICATION

(11) **EP 0 990 552 A1**
(43) Date of publication of application: **05.04.2000**
(21) Application number: 99307749.4
(22) Date of filing: 30.09.1999
(51) Int. Cl.: B60N 2/36

(54) **Automotive seating assembly**

(30) Priority: 30.09.1998 GB 9821176
(71) Applicant: Magna Seating Systems GMBH, 97816 Lohr Am Main (DE)
(72) Inventor: Shephard, Phil Autoseat Technologies Limited, Northants NN12 7HS (GB)
(74) Representative: Raynor, Simon Mark

(57) **Abstract**

A seating assembly for a vehicle has a base (4) and a back (6). The base (4) and the back (6) may be moved between an erected position (for occupation by a person) and a folded position (to free space for other purposes) independently of one another. In a preferred embodiment, the base (4) is folded towards the side of the vehicle in its folded position and the back (6) is folded towards the roof of the vehicle in the folded position.

## Description

The present invention relates to an automotive seating assembly. In particular, but not exclusively, the invention relates to a folding rear car seat that folds against the sides and towards the roof lining of the vehicle.

An aim of the present invention is to provide improvements generally to seating assemblies for vehicles. More particularly, it is an aim of the invention to provide a seating assembly which enhances the flexibility and/or the extent to which the interior space of a vehicle can be used. All aspects of the invention have applicability to a wide range of vehicles, including passenger-carrying motor road vehicles such as cars, multi-purpose vehicles, off-road vehicles and public service vehicles.

Accordingly, from a first aspect, the present invention provides a folding seating assembly.

More particularly, from a second aspect the invention provides an automotive seating assembly comprising a seat base and a seat back, in which the seating assembly can when unoccupied be folded from an erected to a stored position characterised in that each of the base and the back can be moved independently of the other to the stored position. Thus, a user need fold only those parts of the seat needed to free sufficient space for a specific purpose.

In a preferred embodiment, in the folded position, the back is pivoted towards the roof of a vehicle in which the seating assembly is mounted, so leaving unobstructed floor space in the vehicle. Typically, in such embodiments, the back is pivoted about an axis which is approximately horizontal when the seating assembly is mounted in a vehicle.

Furthermore, in preferred embodiments, in the folded position, the base is pivoted towards a side of a vehicle in which the seating assembly is mounted. Typically, in such embodiments, the base is pivoted about an axis which is generally longitudinal of a vehicle in which the seating assembly is mounted.

A third aspect of the invention lies in provision of a seat (such a rear seat for a car) which incorporates a seating assembly as defined above. Such a seat most typically incorporates two seating assemblies embodying the invention configured such that, in the folded position, the respective bases fold towards opposite sides of the vehicle.

From another aspect, the invention provides a motor road vehicle (for example, a car) incorporating a seating assembly embodying the second aspect of the invention.

From yet another aspect, the invention provides a motor road vehicle (for example, a car) having a rear seat embodying the third aspect of the invention.

An embodiment of the invention will now be described, by way of example, with reference to the accompanying drawings, in which:

Figure 1 is a side view of a split rear car seat, including a seating assembly embodying the invention, showing the seat back and base in a normal position and also showing the seat back in a folded position and two semi-folded positions,

Figure 2 is a rear view of the seat bases of a pair of split rear car seats, each being a seating assembly embodying the invention, showing the seat bases in normal and folded positions.

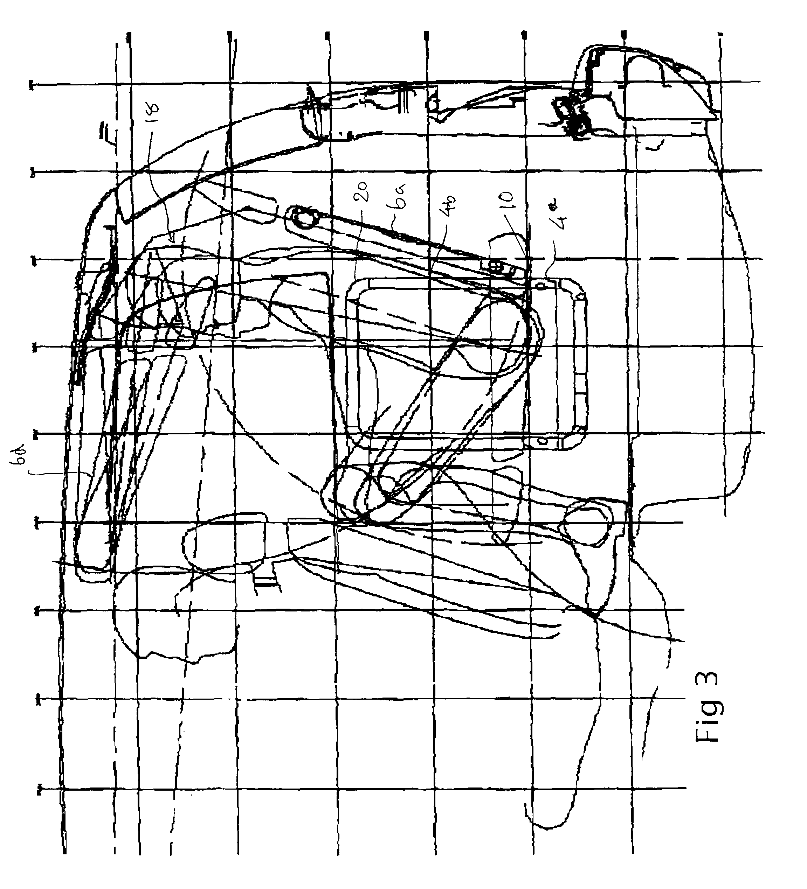

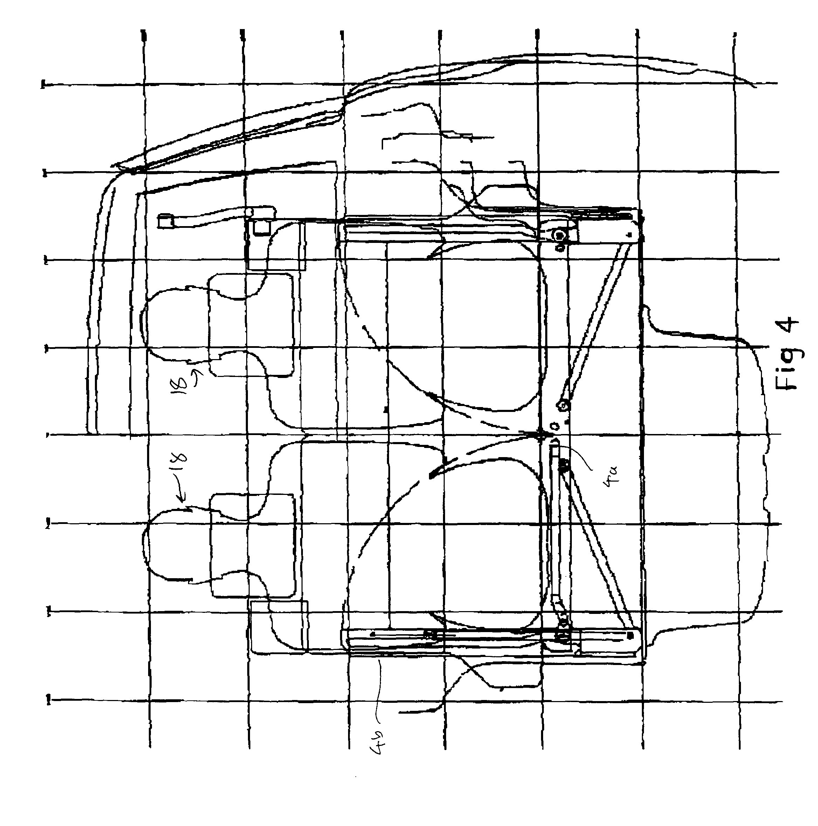

Figures 3 and 4 are views corresponding to Figures 1 and 2, illustrating the seat installed in a passenger vehicle.

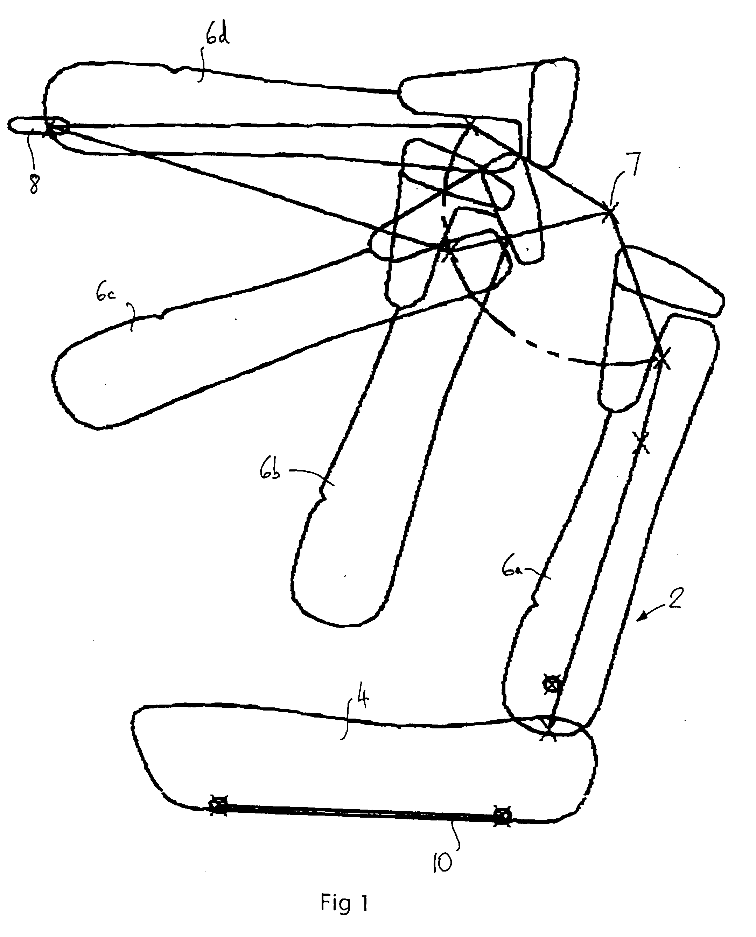

As shown in Fig. 1, each rear seat 2 includes a base 4 and a back (or squab) 6. The base 4 and the back 6 are not connected directly to one another and are capable of independent movement.

For use by an occupant 18, the seating assembly is placed in an erected configuration in which the base 4 and the back 6 are positioned with respect to one another much as they would be in a conventional seat. Specifically, the base 4 is positioned as shown in Figure 1 and the back 6 is positioned as shown at 6a.

When the seating assembly is not required for use by an occupant, it may be folded to a stored configuration in order that the space that it occupies may be used for other purposes such as storage of luggage. To this end, the back 6 is connected to the sides of the vehicle by a hinge mechanism (not shown). The hinge mechanism allows the back 6 to swing upwards about a substantially horizontal axis of rotation 7 from its normal erected position 6a through two semi-folded positions 6b,6c to a fully folded position 6d in which it is positioned against the roof lining (not shown) of the vehicle. It can be locked in the fully folded position by a locking device 8.

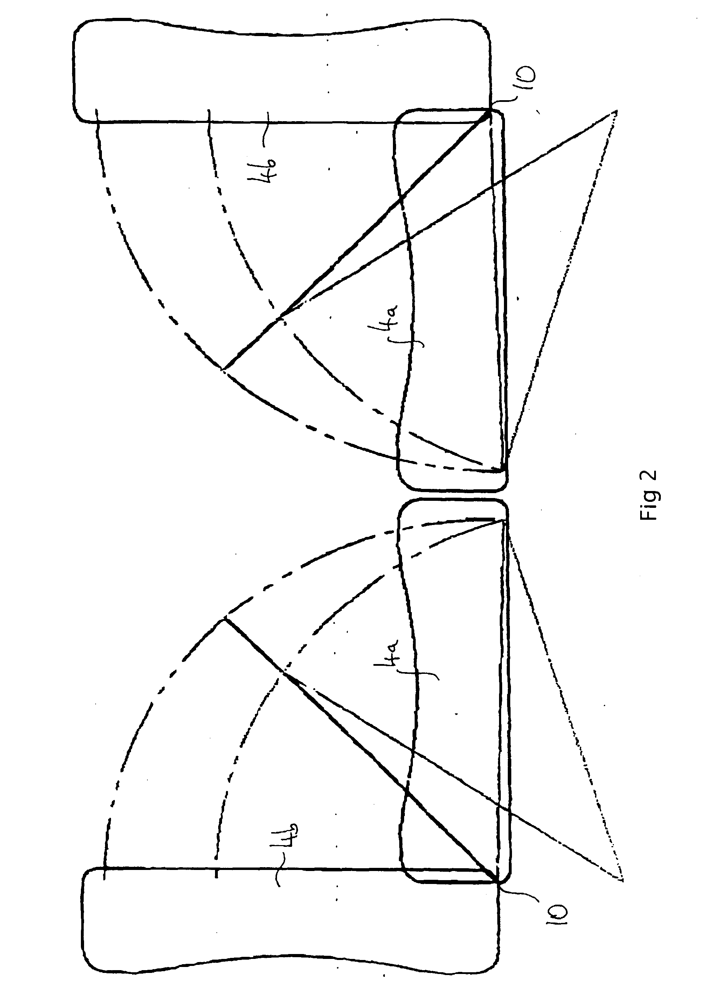

The seat base 4 of each seating assembly is connected to the side (not shown) of the vehicle by a separate hinge mechanism, the pivot axis 10 of which is located adjacent to the side of the vehicle and extends substantially parallel to the longitudinal axis of the vehicle. As shown in Fig. 2, each seat base in the erected configuration is positioned as shown at 4a. When the seating assembly is to be placed into the stored configuration, the base 4 is tilted sideways from its normal position 4a to a folded position 4b in which it is positioned against the side of the vehicle, or within a recess 20 in the side wall of the vehicle. The two bases 4 shown fold to opposite sides of the vehicle in the folded position. A locking device (not shown) is provided in order to lock the base 4 in the folded position.

It will be understood that in embodiments which include two or more such seating assemblies (as shown in Figure 2, for example) each of the seating assemblies can be placed into its folded or erected configuration independently of any other searing assembly. Moreover, the base 4 and the back 6 of each seating assembly can, independently of one another, be placed into either the folded or the erected position.

## Claims

1. An automotive seating assembly comprising a seat base (4) and a seat back (6), in which the seating assembly can, when unoccupied, be folded from an erected to a stored position characterised in that each of the base (4) and the back (6) can be moved independently of the other to the stored position.

2. An automotive seating assembly according to claim 1 in which, in the folded position, the back (6) is pivoted towards the roof of a vehicle in which the seating assembly is mounted.

3. An automotive seating assembly according to claim 2 in which the back (6) is pivoted about an axis which is approximately horizontal when the seating assembly is mounted in a vehicle.

4. An automotive seat assembly according to any preceding claim in which, in the folded position, the base (4) is pivoted towards the side of a vehicle in which the seating assembly is mounted.

5. An automotive seating assembly according to claim 4 in which the base (4) is pivoted about an axis which is generally longitudinal of a vehicle in which the seating assembly is mounted.

6. A rear seat for a car incorporating a seating assembly according to any preceding claim.

7. A rear seat for a car incorporating two seating assemblies according to claim 4 or claim 5 in which, in the folded position, the respective bases (4) fold towards opposite sides of the vehicle.

8. A motor road vehicle incorporating a seating assembly according to any one of claims 1 to 6.

9. A motor road vehicle having a rear seat according to claim 6 or claim 7.
